# EUROPEAN PATENT APPLICATION

(11) **EP 2 043 323 A1**
(43) Date of publication of application: **01.04.2009**
(21) Application number: 07301409.4
(22) Date of filing: 28.09.2007
(51) Int. Cl.: H04L 29/06

(54) **Communication device able to synchronise the received stream with that sent to another device**

(71) Applicant: THOMSON Licensing, 92100 Boulogne-Billancourt (FR)
(72) Inventor: Henry, Jean-Baptiste, 35520 Melesse (FR); BoudaniI, Ali, 35000 Rennes (FR)
(74) Representative: Ruellan-Lemonnier, Brigitte

(57) **Abstract**

An audio stream is to be synchronized with a video stream.
Therefore a system that comprises a first device (4) comprising communicating means (1.1) for receiving in push mode a first multimedia content is disclosed. The first multimedia content is a first component of a stream comprising a second component, the first multimedia content comprises a presentation time stamp adapted to indicate the rendering time of the first multimedia content. Tuning means (1.5) are provided in the first device (4) for shifting the presentation time stamp value, the shifting is intended to synchronize the rendering to the rendering of a second multimedia content of the stream rendered at a second device (2). Further the first device (4) has outputting means (1.4) for rendering the first multimedia content according to the presentation time stamp.
This system can be applied to deliver a lip-sync presentation in a broadband TV, or mobile TV system, which makes use of the MPEG-2 standard.

## Description

The present invention relates generally to digital television and in particular to a method for synchronizing multiple streams at multiple receivers.

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Multiple ways, such as broadband TV and mobile TV, coexist today to bring multimedia steams to the end-user. With broadband TV, the receiver is usually a standard TV device, connected to the receiving device, called a Set-Top Box or STB. With mobile TV, the receiver device is a mobile terminal such as a mobile phone or a Personal Digital Assistant.

In a MPEG-2 stream, several components, e.g. audio, video, are synchronized between each other in order to be rendered at the proper time. This is called inter-component synchronization. A common example is the lip synchronization, noted lip-sync, which provides the audio at the exact same time as the lips of the person move on the corresponding video. Such synchronization is typically achieved thanks to specific time stamps. In MPEG-2 streams, the Presentation Time Stamp, or PTS, ensures such synchronization. The PTS of the audio sample indicates its presentation time, in reference to the internal clock (which is set thanks to the PCR also contained in the MPEG-2 stream); in the same way, the PTS of the video sample indicates its presentation time, also in reference to the same internal clock.

The convergence of all ways to distribute multimedia content to the end-user enlarges the possibilities to mix delivery mechanisms. For example, a first audio-video stream may be sent through the broadband network to the STB, and a second audio-video stream identical to the first audio-video stream may be sent through the mobile network to a mobile terminal. Such multimedia components, which are rendered on different devices, cannot be synchronized with the inter-component synchronization mechanism because the devices don't know each other component PTS. So an end user cannot use at the same time the mobile terminal to listen to the audio corresponding to the first video displayed through the STB. Even if the same encoder is at the origin of both streams sharing the same PTS and PCR, the rendering time may not be the same at receiving devices. This is mainly due to the buffers used by the receiving and decoding units within the devices that may not be the same, and then provide different delays.

Another example is a device receiving a first audio-video stream from a first delivery network, and a second audio-video stream from a second delivery network, both streams having different timestamps. In this case, there is no means for the receiving device to synchronize components from those both streams.

The present invention attempts to remedy at least some of the concerns connected with synchronizing two streams received by one or more devices from several different distribution networks.

To this end the present invention concerns a device comprising communicating means for receiving in push mode a first multimedia content, the first multimedia content being a first component of a stream comprising a second component, the first multimedia content comprising a presentation time stamp adapted to indicate the rendering time of the first multimedia content, tuning means for shifting the presentation time stamp value, the shifting being intended to synchronize the rendering to the rendering of a second multimedia content of the stream rendered at a second device and outputting means for rendering the first multimedia content according to the presentation time stamp.

Surprisingly the device enables synchronization of the stream it receives with a stream displayed at another device. Synchronization is performed through tuning means. This is a user interface that permits a user to synchronize the stream based on the rendering of a second stream.

The stream is received in a push mode, wherein the transmission of information originates from a server. The information is broadcasted to the receiver.

An audio stream rendered on a first device is synchronized to a video stream rendered on a second device. A first audio-video stream is received through a broadband network at a STB. A second audio stream corresponding to the first video stream is received through the mobile network at a mobile terminal. This second audio stream is for example an audio language different from the first audio.

The presentation time stamp is appended to the packets of the first components of the stream. It is adapted to indicate the rendering time of the first multimedia content. The receiver extracts the presentation time stamp and renders the first multimedia content at the value of the presentation time stamp.

Advantageously this permits a service provider to provide a video on a screen and multiple audios, corresponding to multiple language of the video, on an audio receiver.

The device is any kind of device that comprises communicating means for receiving a stream, the stream being an audio, a video or any interactive content. The device may be, but is not limited to, a Set-Top Box, a cellular device, a DVB-H receiver, a Wi-Fi station.

According to an embodiment the shifting moves forward or moves down the presentation time stamp value.

According to an embodiment the stream is an MPEG-2 stream, the first multimedia content is an audio component of the MPEG-2 stream..

According to another embodiment the stream is an MPEG-2 stream, the first multimedia content is a video component of the MPEG-2 stream.

According to another embodiment the rendering speed is based on an internal clock and in that said tuning means modifies the clock speed.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

The invention will be better understood and illustrated by means of the following embodiment and execution examples, in no way limitative, with reference to the appended figures on which:
- Figure 1 is a block diagram of a system compliant with the embodiment;
- Figure 2 is a block diagram of an object compliant with the embodiment;
- Figure 3 is a diagram indicating the difference of the rendering time;
- Figure 4 is a diagram indicating the modification of the rendering time; and
- Figure 5 is a diagram indicating the modification of the clock.

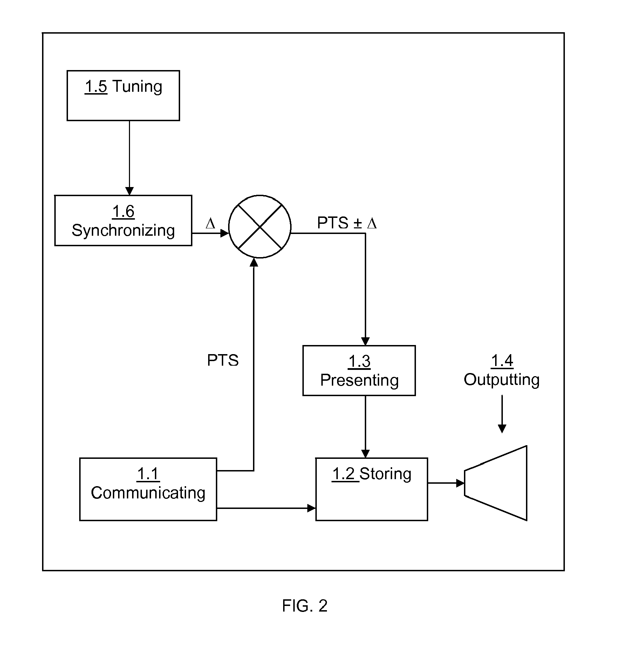

In Figure 2, the represented blocks are purely functional entities, which do not necessarily correspond to physically separate entities. Namely, they could be developed in the form of software, or be implemented in one or several integrated circuits.

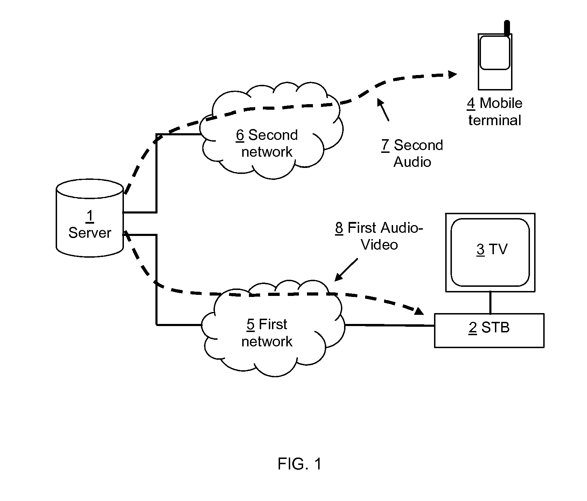

Figure 1 is a block diagram of a system compliant with the embodiment.

A first audio-video stream 6, such as a MPEG-2 Transport Stream, is transmitted by the Video server 1 on the first network 5, which is a broadband network. It is received by the STB 2. The first audio-video stream is displayed on the television 3.

A second audio stream 7 is transmitted through a second network 6 to a mobile terminal 4. The second audio stream corresponds to the first video stream. It allows a user to watch the first video stream on the TV 3 and to listen to the corresponding second audio stream with another audio language on the mobile terminal.

The first and the second streams are broadcasted the respectively the STB and the mobile terminal. They are sent in a push mode.

According to the embodiment, the second audio stream is distributed through a DVB-H network, and the mobile terminal is a DVB-H receiver.

The STB may be located in a public hot spot, which comprises displays for presenting the video. When in the public hot spot, the end user listens on the mobile terminal to an audio corresponding to the video displayed. Different users in the hot spot watch the same video, listening to different audio streams under different languages corresponding to that video.

Of course the second audio stream might be distributed through any network that can transport an audio stream to a mobile terminal, such as a cellular network, a Wi-Fi network. And the mobile terminal might be a device such as a cellular terminal, a Wi-Fi receiver, a DVB-T terminal.

The STB and the mobile terminal receive streams coming from the same Video server. The streams hold components of the same TV program. Those two devices do not exchange any message, and they cannot know how the other renders the same TV program. Of course they could also receive the streams from different servers.

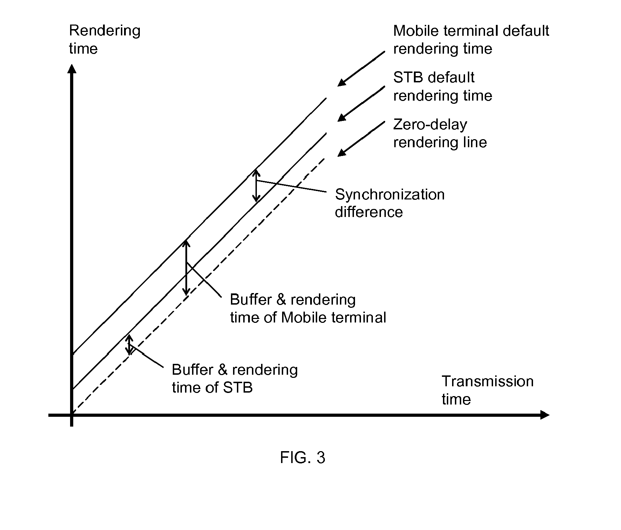

The rendering of the streams on the TV and on the mobile terminal are not necessarily synchronized. Rendering delay is dependant on various parameters such as the transmission networks, or the local buffers in each of the receiving devices as illustrated on figure 3.

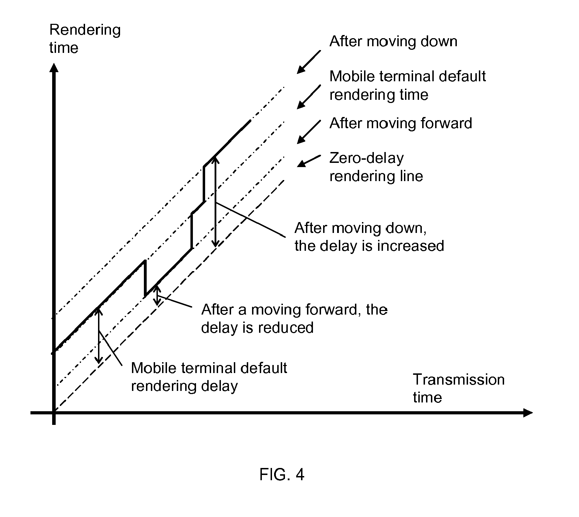

A mobile terminal according to the embodiment is represented in figure 2. It comprises a communicating module 1.1 for receiving the audio stream. The receiving module extracts the Presentation Time Stamp, or PTS, from the stream. The mobile terminal comprises a tuning module 1.5. According to the embodiment, the tuning module is a cursor that comprises two positions. A first position is adapted to move forward the rendering time. A second position is adapted to move down the rendering time. If the end user wants to play the second audio stream sooner, it sets the cursor towards the second position to reach the suitable delay. If he wants to play the audio stream later, he sets the cursor towards the first position. Of course the tuning module may be any kind of user interface that comprises two such positions for providing the delaying function. The synchronizing module 1.6 is adapted to modify the value of the PTS. From the input received from the tuning module, the synchronizing module reduces or increases the value of the PTS by a value Δ. This permits to play the stream sooner or later than the time indicated in the PTS extracted from the stream. The modified PTS is sent to the presenting module 1.3. The stream is decoded by a decoding module not represented in the figure, and sent to the storing module 1.2. The presenting module indicates to the storing module 1.2 when to play the stream, in accordance with the PTS value. Then the stream is played at the outputting module 1.4. The mobile terminal also comprises processing means, not represented. The outputting module may also be adapted to send the stream to another device that plays renders the stream. As indicated in figure 4, the rendering time of the second stream is then modified; after moving down the delay is increased and after moving forward the delay is reduced.

Of course the tuning module may be locked. When locked the tuning module can not be set to the first or the second position.

According to the embodiment, the STB may also comprise a tuning module and a synchronizing module. This allows modifying the rendering time of the first audio-video stream. This makes sense when the tuning module of the mobile terminal does not allow enough delaying of the rendering time of the second audio. This may happen because the transmission and the buffering time are different between the STB and the mobile terminal, and the mobile terminal does not receive the second audio early enough. The mobile terminal cannot move forward the audio enough to synchronize to the first video. The tuning module of the STB allows then to move down the rendering of the audio-video stream to give the mobile terminal more time to receive the audio streams. The STB according to the embodiment is represented in figure 2. The outputting module 1.4 sends the stream to a TV that renders the steam.

Alternatively, the synchronizing module is also adapted to modify the value of the internal clock of the device. It increases or decreases the value of the running speed of the clock. The receiving device plays the stream based on the internal clock. This permits to accelerate or slow down the rendering of the stream. This permits to tune the rendering speed to the same rendering speed as the other device. The increase or decrease is performed pace by pace.

The clock modification is launched as follow. The synchronizing module detects that the tuning module has been successively activated several time to adapt the rendering. Further to modifying the PTS value, the synchronizing module also modifies the clock speed. If the PTS value is increased, the clock speed is also increased. If the PTS value is decreased, the clock value is also decreased.

When the clock of the device is not running at the same speed as the clock of the other device, the PTS modification is not sufficient. The synchronizing module detects that several PTS modifications are not sufficient, and then launches a clock speed modification. After several iterations the clock speed is matched to the clock speed of the other device.

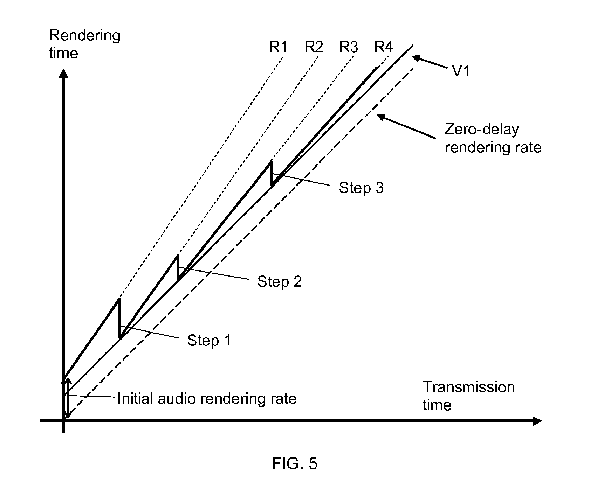

According to the embodiment, the clock speed at the receiver is compliant to the MPEG-2 standards. It is set to 27MHz. According to the embodiment, the pace is 100Hz. Of course in various embodiments, the clock speed and the pace could have different values. As indicated on figure 5, the audio rendering rate R1 is higher than the video rendering rate V1. The synchronizing module reduces the clock speed by one pace, here by 100Hz, and then reduces the audio rendering rate R2, step 1. This adaptation may require the modification of the clock speed by a plurality of paces, step 2, step 3. And the audio rendering rate takes several values R3, R4 before it matches the video rate.

The embodiments deal with synchronization of an audio stream with a video stream. More generally the tuning module of the embodiment is also applicable to synchronization of any stream type to any other stream to which it is not synchronized. The embodiments are also applicable to rendering of content stored in each device, where two devices store the same audio-video content and play this content. It is also applicable to a combination of devices receiving steaming content and devices playing stored content.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Device comprising:
- communicating means for receiving in push mode a first multimedia content, said first multimedia content being a first component of a stream comprising a second component, said first multimedia content comprising a presentation time stamp adapted to indicate the rendering time of the first multimedia content;
- tuning means for shifting the presentation time stamp value, said shifting being intended to synchronize said rendering to the rendering of a second multimedia content of said stream rendered at a second device; and
- outputting means for rendering said first multimedia content according to the presentation time stamp value.

2. Device according to claim 1, **characterized in that** said shifting moves forward or moves down the presentation time stamp value.

3. Device according to claim 1, **characterized in that** said stream is an MPEG-2 stream, the first multimedia content is an audio component of the MPEG-2 stream.

4. Device according to claim 1, **characterized in that** said stream is an MPEG-2 stream, the first multimedia content is a video component of the MPEG-2 stream.

5. Device according to any one of the preceding claims, **characterized in that** said rendering speed is based on an internal clock and **in that** said tuning means modifies the clock speed.
